(19) Europäisches Patentamt
European Patent Office
Office européen des brevets

(11) **EP 2 161 125 B1**

(12) **EUROPÄISCHE PATENTSCHRIFT**

(45) Veröffentlichungstag und Bekanntmachung des Hinweises auf die Patenterteilung:
**03.10.2012  Patentblatt 2012/40**

(21) Anmeldenummer: **09010200.5**

(22) Anmeldetag: **07.08.2009**

(51) Int Cl.:
*B32B 25/08* (2006.01)   *B32B 27/08* (2006.01)
*B32B 27/22* (2006.01)   *B32B 27/32* (2006.01)
*B32B 27/34* (2006.01)   *B32B 27/36* (2006.01)
*B32B 27/40* (2006.01)   *B60K 37/00* (2006.01)
*B60R 13/02* (2006.01)   *C08J 5/18* (2006.01)
*B32B 7/12* (2006.01)

(54) **Kunststoffverbundformteil im Drei-Schicht-Aufbau**

Plastic compound moulded part in three layer construction

Pièce de formage composite en matière synthétique en construction à trois couches

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.08.2008  DE 102008038522**

(43) Veröffentlichungstag der Anmeldung:
**10.03.2010  Patentblatt 2010/10**

(73) Patentinhaber:
• **Bayer MaterialScience AG**
  **51368 Leverkusen (DE)**
• **PTS Plastic Technologie Service Marketing & Vertriebs GmbH**
  **91587 Adelshofen (DE)**

(72) Erfinder:
• **Woeste, Govert, Dr.**
  **40237 Düsseldorf (DE)**
• **Drube, Wolfgang**
  **51519 Odenthal (DE)**
• **Hättig, Jürgen**
  **51519 Odenthal (DE)**
• **Aumüller, Werner**
  **91619 Unteraltenbernheim (DE)**
• **Stenglin, Uwe**
  **91587 Adelshofen/Tauberzell (DE)**

(74) Vertreter: **Feldhues, Michael L.F.**
  **Bayer MaterialScience AG**
  **LP Patents and Licensing**
  **Geb.: Q 18 LEV LEV**
  **51368 Leverkusen (DE)**

(56) Entgegenhaltungen:
**EP-A1- 0 710 703     EP-A1- 1 225 036**
**EP-A2- 0 699 519     DE-A1- 19 845 235**
**DE-A1-102004 033 139**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Kunststoffverbundformteile, insbesondere für die Kraftfahrzeuginnenausstattung, im Drei-Schicht-Aufbau umfassend ein nicht-geschäumtes Trägerelement sowie eine Oberflächenschicht mit einer zwischen Trägerelement und Oberflächenschicht angeordneten haftungsmodifizierten Funktionsschicht.

Bezüglich des technologischen Hintergrunds wird auf die DE-A 24 16694 verwiesen, welche eine Vorrichtung zur Herstellung von Formteilen aus Treibmittel enthaltenden thermoplastischen Kunststoffen mit glatter Oberfläche und geschäumtem Kern, bestehend aus zwei Formhälften und einer Atmungseinrichtung, durch die das Anfangs- bzw. Einspritzvolumen veränderbar ist, beschreibt. Allgemein wird die Veränderung bzw. Vergrößerung als "Atmen" bezeichnet.

Gemäß der DE 24 16694 A1 wird bei der Herstellung eines Formteils aus einem ein Treibmittel enthaltenden thermoplastischen Kunststoff zuerst das Formwerkzeug geschlossen. Nachfolgend wird über eine Düse einer Spritzgießmaschine ein vorgegebenes Schussvolumen eines auf Schäumtemperatur erhitzten, plastifizierten Kunststoffes eingespritzt. Während des Einspritzvorganges wird ein den Gasdruck des Treibmittels übersteigender Schließdruck beibehalten, so dass die eingespritzte Kunststoffmasse nicht schäumen kann.

Nachdem sich diese unter Druck stehende Kunststoffmasse an der Oberfläche unter Bildung einer glatten Oberflächenschicht abgekühlt hat, werden die Formhälften definiert auseinander bewegt und damit das Volumen vergrößert. Durch die Vergrößerung wird der Druck der eingespritzten Kunststosmasse abgesenkt, so dass sich die innere, noch warme und plastische Kunststoffmasse ausdehnen kann. Dabei behält die abgekühlte und verfestigte Oberflächenschicht ihre Lage an der Wandung der vergrößerten Form und es bildet sich ein geschäumter Kern.

Ferner wird auf die DEA 43 04 751 verwiesen, welche ein Verfahren zur Herstellung eines Kunststoffteils betrifft, auf das eine Oberflächenschicht aus einem Schaumkunststoff aus einem thermoplastischen Elastomer mit einer Außenhaut aufgebracht wird.

Gemäß der DE 43 04 751 A1 wird zur Herstellung eines Verbundteils das Kunststoffteil in einer Spritzgießform so angeordnet, dass auf der Seite der aufzubringenden Oberflächenschicht ein Hohlraum frei bleibt. Nachfolgend wird in diesen Hohlraum eine schäumbare Masse aus dem thermoplastischen Elastomer und einem Treibmittel gespritzt und beim Verschäumen der Masse der Hohlraum vergrößert.

Mit dem in der DE 43 04 751 A1 vorgeschlagenen Verfahren wird die Herstellung von Kunststoffverbundformteilen, welche ein Kunststoffteil mit einer Schaumkunststoff-Oberflächenschicht umfasern wesentlich vereinfacht.

Gemäß der EP-B 0 907 484 wird zur Herstellung eines Spritzgießteils ein Einleger in einem Formhohlraum angeordnet und über einen Spritzzylinder mit einer Schichtung aus mindestens einer harten und im Anschluss daran mindestens einer weichen Komponente eines Kunststoffmaterials umspritzt. Hierbei soll die harte Komponente sowohl eine relativ harte, einen trockenen Griff erzeugende Außenhaut bilden als auch die Haftung zum Einleger gewährleisten. Die von der harten Komponente eingeschlossene weiche Komponente hingegen soll einen weichen Griff erzeugen. Diese angenehme Druckhaptik, also eine gewünschte Drucknachgiebigkeit, wird durch eine Härte der weichen Komponente von 7 bis 40 Shore A erreicht.

Beim in EP-B 0 907 484 beschriebenen Verfahren zur Herstellung von Bauteilen handelt es sich um ein Sonderverfahren des Verbundspritzgießens (Mehrkomponentenverfahren), dem sogenannten Sandwichspritzgießen. Hierbei werden zwei Materialien (Oberflächen- und Funktionsschicht) gleichzeitig über eine Anbindung in den Formhohlraum eingespritzt. Das Material der Oberflächenschicht wird beim Formfüllvorgang vorgelegt, bildet dann die sogenannte Hautkomponente und danach wird deren plastische Seele mit dem Werkstoff der Funktionsschicht (Kernkomponente) ausgefüllt. Hierbei lagert sich die Hautkomponente (Oberflächenschichtwerkstoff) an die Formwandung, so dass diese die Bauteiloberfläche abbildet. Noch vor dem Einspritzen im Sandwichverfahren wird zuvor das Trägerelement als Einleger positioniert und dann vom Sandwich überströmt, so dass dessen Hautkomponente, die Oberflächenschicht, sich stoffschlüssig mit dem Trägerelement verbindet. Um eine angenehme Druckhaptik bei gleichzeitiger kratzfester Oberfläche zu erzielen, werden für die Oberflächenschicht thermoplastische Elastomere mit deutlich höherer Shore A-Härte als jene der Funktionsschicht verwendet.

Das in EP-B 0 907 484 dargestellte Verfahren stößt bei der Herstellung von flächig überspritzten Bauteilen an seine Grenzen. Beim Spritzgießprozess von Formteilen treten in der Regel beim Umfließen von Aussparungen/Einlegeteilen Materialzusammenflüsse auf, die so genannten Bindenähte. Beim Sandwichverfahren sind somit derartige Bindenähte immer aus dem Werkstoff der Hautkomponente (also der härteren Oberflächenschicht). Am fertigen Bauteil zeigen die Oberflächen im Bereich der Bindenähte eine andere Druckhaptik, nämlich eine deutliche Zunahme der Härte des Schichtaufbaues aufgrund des Fehlens der darunter liegenden Funktionsschicht (Kernkomponente).

Diese unregelmäßige Druckhaptik wird in der Praxis jedoch von den Anwendern der Bauteile nicht akzeptiert. Da das in EP-B 0 907 484 beschriebene Sandwichverfahren beim Formfüllvorgang nach dem Verdrängungsprinzip funktioniert, werden zudem am Fliesswegende (Bauteilgrenze) Bereiche gebildet, die nur aus Oberflächenschichtwerkstoff bestehen. Diese Bereiche zeichnen sich ebenfalls gegenüber Bereichen zur Formteilmitte hin durch eine deutlich höhere, nicht akzeptable Härte und somit völlig andere Druckhaptik aus.

In EP-B 0 907 484 wird auch dargelegt, dass sich durch das Umschließen der weichen Funktionsschicht durch die harte Oberflächenschicht eine dünne Schicht der harten Komponente an den eingelegten Träger anlegt. Sie sorgt dort derart für eine Haftung zwischen dem Träger einerseits und den übrigen Schichten andererseits, die laut EP-B 0 907 484 zwischen Träger und weicher Komponente unzureichend wäre. Diese laut EP-B 0 907 484 erforderliche Abfolge der einzelnen Schichten macht das Bauteil aufwändig und fehleranfällig.

Einen ähnlichen Drei-Schicht-Aufbau beschreibt DE-A 10 2004 033 139. Hier wird die die Druckhaptik erzeugende weiche Schicht in einem Schaumspritzgießverfahren zwischen Oberflächenschicht und Trägerelement eingebracht. Diese als Funktionsschicht bezeichnete Komponente soll nicht näher beschriebene haftungsmodifizierende Eigenschaften aufweisen. Als Funktionsschichtwerkstoff wird ein weicher Thermoplast genannt, ohne detaillierte Definition hinsichtlich der Art und Morphologie sowie der Härte des thermoplastischen Werkstoffes. Weiche Thermoplaste sind in der Regel alle TPE- Werkstoffe (Thermoplastische Elastomere), zu denen Werkstoffe mit einer Härte von bis zu 72 Shore D gehören. Demnach sind Drei-Schicht-Bauteile definierbar, bestehend aus Trägerelement, Funktionsschicht und Oberflächenschicht, wobei die beiden letztgenannten aus der gleichen Werkstofffamilie und mit gleicher Härte sein können. Wird z.B. ein Schichtaufbau mit einer Oberflächenschicht aus TPU Härte 90 Shore A und einer Funktionsschicht aus einem weichen Thermoplasten ebenfalls aus TPU Härte 90 Shore A generiert, so ist aufgrund der gleichen Härte keine Drucknachgiebigkeit (Druckhaptik) und Rückfederungseigenschaft einstellbar.

Das Herstellverfahren eines Drei-Schicht-Aufbaus wird in DE-A 10 2005 024 776 beschrieben und bezüglich Komplexität, Vermeidung von Beschnittabfall sowie Wandstärkenqualität verbessert.

Ein ähnlicher Mehrschichtaufbau wird in DE 34 14 794 C2 beschrieben, wobei als Träger ein Schaumkörper verwendet wird.

DE-A 10 005 862 beansprucht ein Verfahren zur Herstellung eines Zwei-Schichten-Aufbaus aus einem Träger und einem Schaum. Bei dem Schaum kann es sich um ein SBS (Styrol-Butadien-Styrol-Blockcopolymer), ein SEBS (Styrol-Ethylen-Butylen-Styrol-Blockcopolymer), ein PU (Polyurethan), ein PP-EPDM (Polypropylen-Ethylen-Propylen-Dienmonomer-Blockcopolymer), ein Polyesterelastomer oder ein biologisches Basismaterial handeln. Zur Erzeugung einer besseren Bindung zwischen Träger und Schaum werden nicht näher spezifizierte Verträglichkeitsvermittler eingesetzt. Auf den Schaum kann ein Dekormaterial aufgebracht sein.

In US-A 5 472 782, in der ein Zwei-Schicht-Aufbau beansprucht wird, werden zur Verbesserung der Haftung von thermoplastischen Polyurethanen an harten Kunststoffen Compounds aus SBS (Styrol-Butadien-Styrol-Blockcopolymer) oder SIS (Styrol-Isopren-Styrol-Blockcopolymer) sowie deren jeweiligen hydrierten Formen mit thermoplastischem Polyurethan beschrieben, wobei der Anteil an thermoplastischen Polyurethanen 50 bis 97 Gewichtsprozent beträgt.

Die DE 198 45 235 A1 offenbart Verbundkörper aus Polyacetal und einem Compound aus fünktionalisiertem und/oder nicht-funktionalisiertem Styrol-OleSn-Blockcopolymeren und nicht-olefinischem Thermoplastmaterial. Die in der DE 198 45 235 A1 verwendeten Styrol-Olefin-Blockcopolymere sind beispielsweise solche hydrierten Styrol-Blockcopolymere, wie sie in der EP 0 710 703 A1 oder aus der EP 0 699 519 A2 beschrieben sind.

Weiterhin offenbart die EP 1 255 036 A1 Verbundkörper aus Polyacetal und einer Weichkomponente aus einem Styrol-Block-Copolymer. Dem Styrol-Block-Copolymer werden als Hartungsmodikatoren Styrol/Butadien-Copolymere und/oder olefinische Werkstoffe zugesetzt.

Weder die DE 198 45 235 A1 noch die EP 1 255 036 A1 offenbaren Verbundkörper aus drei verschiedenen Schichten, wobei als Trägerschicht eine Auswahl der verschiedensten Trägerschichten eingesetzt werden können, alle drei unterschiedlichen Schichten einen Beitrag zu den Eigenschaften des Verbundformteils aufweisen und diese außerdem untereinander sehr gut und stoffschlüssig haften.

Grundsätzlich besteht das Bedürfnis, Kunststoffverbundformteile im Drei-Schicht-Aufbau zu realisieren, in dem jede Schicht einen bestimmten Beitrag zu den Eigenschaften des Kunststoffverbundformteils beiträgt.

Bislang konnte insbesondere das Problem der Haftung zwischen den einzelnen Werkstoffen der verschiedenen Schichten entweder nur durch komplizierte Verfahren oder aber nicht zufrieden stellend gelöst werden. Darüber hinaus waren viele der bisher verfügbaren Kunststoffverbundformteile im Mehr-Schicht-Aufbau aufgrund ihrer Zusammensetzung aus unterschiedlichen Werkstoffklassen nicht recyclingfähig.

Aufgabe war es daher, ein Kunststoffverbundformteil im Drei-Schicht-Aufbau zur Verfügung zu stellen, welches zur Erzielung eines bestmöglichen Preis-Leistungs-Verhältnisses einfach herzustellen ist und bei dem die Schichten untereinander sehr gut und stoffschlüssig haften.

Diese Aufgabe konnte unter Verwendung einer speziellen haftungsmodifizierten Funktionsschicht gelöst werden.

Gegenstand der Erfindung ist ein Kunststoffverbundformteil, das ein nicht-geschäumtes Trägerelement sowie eine Oberflächenschicht mit einer zwischen Trägerelement und Oberflächenschicht angeordneten haftungsmodifizierten Funktionsschicht umfasst, welches dadurch gekennzeichnet ist, dass als Oberflächenschicht spritzgegossene Folien bzw. Häute oder Slush-Häute aus weichgemachtem PVC, einem thermoplastischen Polyetherblockamid (TPE-A), einem thermoplastischen Polyester-Elastomer (TPE-E), einem thermoplastischen Polyolefine (TPE-O) oder einem thermoplastischen Polyurethan (TPU) verwendet werden, und dass die haftungsmodifizierte Funktionsschicht

a) mindestens ein thermoplastisches Elastomer aus der Gruppe bestehend aus hydrierten Styrol-Blockcopolymeren (HSBC),

b) mindestens einen Haftungsmodifikator aus der Gruppe bestehend aus thermoplastischen Polyetherblockamiden (TPE-A), thermoplastischen Polyester-Elastomeren (TPE-E) und thermoplastischen Polyurethanen (TPU) in einer Menge von 60 bis 100 Gewichtsteilen, besonders bevorzugt von 60 bis 95 Gewichtsteilen, ganz besonders bevorzugt von 60 bis 90 Gewichtsteilen, bezogen auf 100 Gewichtsteile der Summe aus Elastomer a) und gegebenenfalls Verträglichkeitsvermittler d),

c) mindestens einen Weichmacher und

d) gegebenenfalls einen Verträglichkeitsvermittler

enthält und eine Härte von kleines als 46 Shore A aufweist, und das nicht-geschäumte Trägerelement aus einem thermoplastischen Kunststoff ausgewählt aus der Gruppe bestehend aus Polyamid (PA), Polypropylen (PP), glasfaserverstärktes PP, Polyphenylenoxid (PPO), Polybutylenterephthalat (PBT), Polystyrol (PS), AcrylnitrilButadien-Styrol-Copolymer (ABS), Polycarbonat(PC)/ABS-Blend, PS/PP-Blend, Styrol-Maleinaäureanhydrid-Copolymer (SMA)/ABS-Blend, ABS/PA-Blend, PBT/PC-Blend und PBT/Acrylnitril-Styrol-Acrylester(ASA)-Blend, besteht.

Mit der erfindungsgemäßen Zusammensetzung der Funktionsschicht können Einstellungen, insbesondere der optischen und haptischen Eigenschaften (Druckhaptik), von besonderer Qualität bei gleichzeitig sehr guter Haftung zwischen Oberflächenschicht und Funktionsschicht einerseits und Funktionsschicht und Träger andererseits sowie zu niedrigen Herstellungskosten erreicht werden. Des Weiteren werden Aspekte der EU-Altautorichtlinie 2000/53/EG im Hinblick auf die Recyclingfähigkeit der Kunststoffverbundformteile erfüllt. Der reine thermoplastische Drei-Schicht-Aufbau kann aufgrund seiner Wiedereinschmelzbarkeit somit wiederverwendet werden.

Das nicht-geschäumte Trägerelement kann in Spritzgusstechnik hergestellt werden. Bevorzugte Werkstoffe sind ABS, ABS/PA-Blend und PC/ABS-Blend.

Die haftungsmodifizierte Funktionsschicht haftet bei flächiger Überspritzung sehr gut kohäsiv an den genannten Trägerelementen. Konstruktiv können zur Erhöhung der Steifigkeit des Trägerelementes Versteifungsrippen vorgesehen werden.

Als Oberflächenschicht werden vorzugsweise Kunststofffolien, insbesondere Dekorfolien, verwendet. Die Oberflächenschicht kann vorzugsweise genarbt oder strukturiert sein und weist eine bevorzugte Dicke von ca. 0,5 bis 2 mm auf. Die Folie kann beispielsweise aus weichgemachtem Polyvinylchorid (PVC) oder aus einem thermoplastischen Elastomer (TPE), wie z.B. einem thermoplastischen Polyetherblockamid (TPE-A), einem thermoplastischen Polyester-Elastomer (TPE-E), einem thermoplastischen Polyolefin (TPE-O) oder einem thermoplastischen Polyurethan (TPU) hergestellt sein. Vorzugsweise handelt es sich dabei um ein thermoplastisches Polyurethan, besonders bevorzugt um ein aliphatisches TPU, da letzteres besonders lichtbeständig ist. TPUs besitzen des Weiteren innerhalb der thermoplastischen Elastomere eine sehr gute Abriebfestigkeit und Kratzbeständigkeit und sind daher für die Oberflächenschicht besonders geeignet.

Thermoplastische Polyurethane (TPU) sind wegen ihrer guten Elastomereigenschaften und thermoplastischen Verarbeitbarkeit von großer technischer Bedeutung und sind für die Veredlung des unpolaren Kunststoffes der geeignete Partner. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983, gegeben.

Für die Herstellung des erfindungsgemäßen Drei-Schicht-Aufbaus sind prinzipiell alle TPU einsetzbar. Besonders bevorzugt sind TPU, die unter Verwendung der folgenden Grundbausteine hergestellt werden: Hexamethylendiisocyanat, 4,4'-Diphenylmethandiisocyanat, Polyesterpolyol, Polyetherpolyol, 1,4-Butandiol und 1,6-Hexandiol.

Für Oberflächenschichten mit geringer UV-Belastung oder in dunklen Farben können neben aliphatischem TPU auch aromatisches TPU oder Polyesterelastomer (TPE-E) bzw. Blends aus TPU und einem anderen thermoplastischen Elastomer verwendet werden.

Die bevorzugt als Oberflächenschicht eingesetzten Folien können in Slush-Technologie oder mittels Spritzgusstechnik in einem Kompakt- oder Schaumspritzgießverfahren hergestellt werden. Vorzugsweise handelt es sich um spritzgegossene Folien, da hier, insbesondere mit TPU, eine Oberfläche mit nicht sichtbaren Bindenähten erzielt werden kann.

Bevorzugt werden die Folien aus TPU ohne Oberflächenbehandlung und ohne Oberflächenbeschichtung eingesetzt. Bei einem sehr hohen Anspruch an die Abrieb- und Kratzfestigkeit können die Folien zusätzlich einer Oberflächenbehandlung oder -beschichtung unterzogen werden. Des Weiteren können die Folien eine genarbte bzw. strukturierte Oberfläche aufweisen.

Die haftungsmodifizierte Funktionsschicht weist eine niedrige Härte von kleiner als 46 Shore A, besonders bevorzugt kleiner 41 Shore A, auf. Sie enthält a) ein thermoplastisches Elastomer aus der Gruppe bestehend aus hydrierten Styrol-Blockcopolymeren (HSBC), wie z.B. Styrol-Ethylen-Propylen-Styrol-Blockcopolymer (SEPS), Styrol-Ethylen-Ethylen-Propylen-Styrol-Blockcopolymer (SEEPS) und Styrol-Ethylen-Butylen-Styrol-Blockcopolymer (SEBS) sowie Kombinationen von diesen. Daneben enthält die Funktionsschicht als Haftungsmodifikator b) ein Polymer aus der Gruppe bestehend aus thermoplastische Polyetherblockamide (TPE-A), thermoplastische Polyester-Elastomere (TPE-E) und thermoplastische Polyurethane (TPU), wie z.B. oben beschrieben. Desweiteren enthält die Funktionsschicht einen Weichmacher c), bevorzugt paraffinisches Öl, besonders bevorzugt sogenanntes weißes Mineralöl sowie gegebenenfalls einen Verträglichkeitsvermittler d) aus der Gruppe bestehend aus SBS, Styrol/SBS-Copolymere (z.B. Styroflex® der Fa. BASF SE) und durch polare Pfropfung funktionalisierte thermoplastische Polymere. Die Funktionsschicht kann geschäumt oder nicht geschäumt vorliegen.

Die haftungsmodifizierte Funktionsschicht zeigt beim Hinterspritzen der Oberflächenschicht, z.B. einer spritzgegossenen Folie bzw. Haut oder einer Slush-Haut, eine gute Haftung zu der Oberflächenschicht, so dass sich ein kohäsiver Verbund durch Spritzgießen herstellen lässt.

Bevorzugt wird als Haftungsmodifikator b) in der Funktionsschicht thermoplastisches Polyurethan (TPU), wie oben beschrieben, eingesetzt. Vorzugsweise liegt dieser Haftungsmodifikator in einer Menge von 60 bis 100 Gewichsteilen, besonders bevorzugt von 60 bis 95 Gewichtsteilen, ganz besonders bevorzugt von 60 bis 90 Gewichtsteilen, bezogen auf 100 Gewichtsteile des thermoplastischen Elastomers a) und des Verträglichkeitsvermittlers d), soweit vorhanden, der Funktionsschicht, vor.

In einer besonders bevorzugten Ausführungsform enthält die Funktionsschicht einen Verträglichkeitsvermittler.

Als Verträglichkeitsvermittler zwischen dem thermoplastischen Elastomer und dem Hanungsmodifikator können SBS, Styrol/SBS-Copolymer (z.B. Sty-roflex® der Fa. BASF SE) oder ein durch polare Pfropfung funktionalisiertes thermoplastisches Polymer, wie z.B. hydrierte Styrol-Blockcopolymere (HSBC), Polypropylen (PP), Ethylen-Propylen-Dienmomoner-Blockcopolymer (EPDM), Polyotefin, Methacrylat-Butadien-Styrol-Blockcopolymer (MBS, Core-Shel-Modifikator), Polystyrol, und/oder Ionomer (z.B. Surlyn® der Fa. DuPont) eingesetzt werden. Die Funktionalisierung der genannten thermoplastischen Polymere wird z.B. durch Pfropfung mit organischen Verbindungen, die polare Gruppen euthalten, wie z.B. Anhydride (z.B. Maleinsäureanhydrid (MA)), Acrylate, Epoxide und/oder Säuregruppen, erreicht. Bevorzugt wird als Verträglichkeitsvermittler einer der vorgenannten polar gepfropften thermoplastischen Polymere eingesetzt, besonders bevorzugt funktionalisierte HSBC. Vorzugsweise liegt der Verträglichkeitsvermittler in einer Menge von 0 bis 100 Gewichtsteilen, bevorzugt von 1 bis 100 Gewichtsteilen, bezogen auf 100 Gewichtsteile des thermoplastischen Elastomers a) der Funktionsschicht, vor.

Bevorzugt wird als Weichmacher paraffinisches Öl, besonders bevorzugt sogenanntes weißes Mineralöl eingesetzt. Vorzugsweise liegt dieses in einer Menge von 1 bis 300 Gewichtsteilen, bezogen auf 100 Gewichtsteile des thermoplastischen Elastomers a) der Funktionsschicht und des Verträglichkeitsvermittlers d), soweit vorhanden, vor.

Die haftungsmodifizierte Funktionsschicht weist eine bevorzugte Wanddicke von einigen Millimetern, insbesondere von ca. 2 bis 15 mm auf und enthält die oben beschriebenen Bestandteile. Die Funktionsschicht kann durch chemische oder physikalische Treibmittel oder eine Kombination aus beiden aufgeschäumt sein und kann dann z.B. in einem Formatmungsverfahren als Schaumschicht ausgebildet werden.

Die Herstellung des Kunststoffverbundformteils erfolgt in einem Spritzgießwerkzeug, welches zwei einen Formhohlraum umschließende Formhälften sowie gegebenenfalls Schieber umfasst.

Bevorzugt lässt sich das Kunststoffverbundformteil derart herstellen, dass zunächst das Trägerelement sowie die Oberflächenschicht separat in einem Spritzgussprozess hergestellt werden. Das so gefertigte Trägerelement bzw. die so gefertigte Oberflächenschicht werden dann in eine Spritzgussform so eingelegt, dass zwischen ihnen ein Hohlraum verbleibt, in den dann die Funktionsschicht in einem weiteren Spritzgussverfahrensschritt eingebracht wird.

Für das Erreichen einer weichen Druckhaptik ist eine Schaumstruktur in der Funktionsschicht von Vorteil. Diese Schaumstruktur wird durch das bekannte TSG-Verfahren (TSG = Thermoplast-Schaum-Gießen nach Saechtling, Kunststofftaschenbuch, 30. Ausgabe) in Kombination mit der Formatmung bei der Spritzgussverarbeitung erreicht. Die Schaumstruktur wird vorzugsweise durch physikalische Treibmittel auf Basis von Mikrosphären (= unter Temperatureinwirkung expandierende Hohlkugeln, wie z.B. THERMOCEL-Master 180/65 der Fa. Plastic Technologie Service) erreicht. Diese werden vor dem Spritzgießen in einer Dosierung von bevorzugt 2 bis 6 Gew.-%, bezogen auf die Masse der Funktionsschicht, beigemengt.

Durch das Formatmungsverfahren (Öffnen der Kavität nach dem Einspritzen um einen definierten Schäumhub) kann das Mikrosphären-Treibmittel in der Funktionsschicht seine Wirkung optimal erzielen und eine feinzellige Schaumstruktur erzeugen.

Die erfindungsgemäßen Kunststoffverbundformteile zeichnen sich durch eine angenehme Druckhaptik, also eine weiche Druckverformbarkeit der Formteiloberfläche sowie guter Verschleißfestigkeit aus.

Bei der Herstellung der erfmdungsgemäßen Kunststoffverbundformteile ist kein Nacharbeiten, wie z.B. Ausschneiden oder Ausstanzen von Durchbrüchen (wie z.B. für Radiofächer, Lüfterdüsen in einer Instrumententafel) oder Entfernen von Graten erforderlich. Auch eine Nachbehandlung der Oberfläche der Kunststoffverbundformteile, um diese abrieb- und kratzfest zu machen, ist nicht erforderlich. Das beschriebene Verfahren ermöglicht ein hohes Maß an Funktionsintegration und eine Reduzierung der Herstellkosten.

Die Kunststoffverbundformteile werden bevorzugt im Fahrzeuginnenraum eingesetzt, z.B. als Armaturentafel, Türinnenverkleidung, Ablageschale, Griff, Bedienknopf, Blende oder dergleichen.

Die Erfindung soll anhand der nachfolgenden Beispiele näher erläutert werden.

**Beispiele**

Bei den genannten PC+ABS-Blends mit dem Handelsnamen BAYBLEND® T85 sowie dem TPU Desmopan® DP85092A handelt es sich um Handelsprodukte der Fa. Bayer MaterialScience AG (Leverkusen, Deutschland).

Die Herstellung der Funktionsschichtwerkstoffe erfolgte in einem Mischprozess unter Temperatureinwirkung in einem üblicherweise für die Compoundierung von Kunststoffen verwendeten Zweischnecken-Kneter (ZSK, Doppelschnecken-Extruder). Eine Vormischung entsprechend des Rezepturaufbaus (vgl. Tabelle 1) aus den Rohstoffen wurde über eine Dosiereinrichtung dem Zweischnecken-Extruder zugeführt, unter Temperatur (von 140°C bis 250°C) und Scherwirkung plastifiziert und homogenisiert. Die plastifizierte Kunststoffmasse wurde beim Verlassen des Zweischnek-ken-Extruders durch eine Lochplatte und über eine Wassergranuliereinrichtung geleitet, so dass der Funktionsschichtwerkstoff in Granulatform vorlag.

**Tabelle 1: Beschreibung der Werkstoffe in der Funktionsschicht**

| Funktionsschicht | Rezepturaufbau | Härte [Shore A] |
|---|---|---|
| *Polymergranulat 1* | 25 phr SEEPS/30% Styrol-Anteil a)<br>50 phr SEPS/10% Styrol-Anteil a)<br>25 phr SEBS-MA d)<br>60 phr Paraffinöl c)<br>32,5 phr Ether-basiertes TPU Shore A 70 b)<br>17,5 phr Ester-basiertes TPU Shore A 86 b) | *34* |
| *Polymergranulat 2* | 25 phr SEEPS/30% Styrol-Anteil<br>50 phr SEPS/10% Styrol-Anteil<br>25 phr SEBS-MA<br>60 phr Paraffinöl<br>45,5 phr Ether-basiertes TPU Shore A 70<br>24,5 phr Ester-basiertes TPU Shore A 86 | *35* |
| *Polymergranulat 3* | 25 phr SEEPS/30% Styrol-Anteil<br>50 phr SEPS/10% Styrol-Anteil<br>25 phr SEBS-MA<br>60 phr Paraffinöl<br>52 phr Ether-basiertes TPU Shore A 70<br>28 phr Ester-basiertes TPU Shore A 86 | *38* |
| *Polymergranulat 4* | 25 phr SEEPS/30% Styrol-Anteil<br>50 phr SEPS/10% Styrol-Anteil<br>25 phr SEBS-MA<br>60 phr Paraffinöl<br>65 phr Ether-basiertes TPU Shore A 70<br>34 phr Ester-basiertes TPU Shore A 86 | *40* |

(fortgesetzt)

| Funktionsschicht | Rezepturaufbau | Härte [Shore A] |
|---|---|---|
| *Polymergranulat 5* | 25 phr SEEPS/30% Styrol-Anteil<br>50 phr SEPS/10% Styrol-Anteil<br>25 phr SEBS-MA<br>60 phr Paraffinöl<br>110,5phr Ether-basiertes TPU Shore A 70<br>59,5 phr Ester-basiertes TPU Shore A 86 | *48* |
| Die Shore-Härten wurden gemäß ISO 868 bestimmt.<br>"phr" bedeutet "Teile pro Hundert" ("parts per hundred"); Teile bedeutet Gewichtsteile | | |

Der Drei-Schicht-Aufbau wurde durch zeitlich nacheinander folgende Spritzgießvorgänge hergestellt. Zunächst wurden die in separaten Spritzgussprozessen gefertigten Schichten Trägerelement sowie Oberflächenschicht in eine Spritzgussform so eingelegt, dass zwischen ihnen ein Hohlraum verblieb. Dann wurde in einem weiteren Spritzgussverfahrensschritt die Funktionsschicht durch eine oder mehrere vorgesehene Öffnungen bzw. Durchbrüche in dem Trägerelement in diesen Hohlraum eingebracht. Das heißt, der Hohlraum zwischen Oberflächenschicht und Trägerelement wurde komplett mit Funktionsschicht ausgespritzt.

Für das Erreichen einer weichen Druckhaptik wurde in der Funktionsschicht eine Schaumstruktur durch das bekannte TSG-Verfahren (TSG = Thermoplast-Schaum-Gießen nach Saechtling, Kunststofftaschenbuch, 30. Ausgabe) in Kombination mit der Formatmung erzeugt. Hierbei wurde beim Einspritzen der Funktionsschicht in den Formhohlraum zwischen Trägerelement und Oberflächenschicht dieser zunächst volumentrisch und ohne Nachdruck mit Funktionsschichtwerkstoff gefüllt. Unmittelbar nach Ende des Einspritzdrucks und Erreichen einer volumetrischen Füllung wurde dazu über Kemzug bzw. Schieber ein definierter Schäumhub von ca. 20 bis 50 % der ursprünglichen Formhohlraumdicke bei geschlossenem Werkzeug unter Zuhilfenahme von Tauchkanten erzeugt, so dass das zuvor im Trichter der Spritzgießmaschine in einer Menge von 4 bis 6 Gew.-%, bezogen auf die Masse der Funktionsschicht, zugegebene physikalische Treibmittel THERMOCEL-Master 180/65 der Fa. Plastic Technologie Service gegen den atmosphärischen Druck expandierte. Bei diesem Treibmittel handelt es sich um sogenannte Mikrosphären, d.h. um Gasblasen, welche von einer Kunststoffhülle umgeben sind und sich unter Temperatureinwirkung um ein definiertes Maß in der Polymerschmelze ausdehnen.

Da an dem fertigen Drei-Schicht-Aufbau aus praktischen Gründen keine Haftungsmessungen zwischen Oberflächenschicht und Funktionsschicht einerseits sowie zwischen Funktionsschicht und Trägerelement andererseits durchführbar sind, wurden für die Haftungsmessungen jeweils nur aus zwei Schichten aufgebaute Prüfkörper hergestellt.

**Messverfahren zur Ermittlung der Verbundfestigkeit zwischen Hart- und Weichkomponente**

Die grundsätzliche Prüfung der Verbundfestigkeit zwischen 1. Komponente (Trägerelement oder Oberflächenschicht) und Weichkomponente (Funktionsschicht) erfolgt in Anlehnung an ein genormtes Prüfverfahren, den Rollenschälversuch nach DIN EN 1464. Diese Prüfmethode beschreibt die "Bestimmung des Schälwiderstandes von hochfesten Klebungen" und bezieht sich auf Metallklebeverbindungen. Die in DIN EN 1464 beschriebene Rollenschälprüfvorrichtung, welche in eine Zugprüfmaschine eingebaut wird, wurde aufgrund der Prüfkörperabmessungen in ihrer Rollenlänge leicht modifiziert (Verlängerung auf 103 mm), um den Prüfkörper zu positionieren. Ebenso wurde nicht die in der Norm vorgeschriebene Prüfkörpergeometrie verwendet. Die Abweichung des Verbundprüfkörpers zum Normprüfkörper besteht in einer etwas anderen Geometrie sowie in einer kürzeren Verbindungszone beider Komponenten. Da es sich bei den Messungen um relative Vergleichsmessungen handelt, haben die Prüfkörperabweichungen zur Norm für die Auswertung keine Bedeutung. Die Abschälung der Weichkomponente erfolgt gemäß DIN EN 1464 in einem Winkel von 90° zur Verbundfläche.

Der Prüfkörper in den vorliegenden Versuchen ist aus einem Rahmen bestehend aus Oberflächenschicht bzw. Trägerschicht (1. Komponente) mit einer Außendimension von 130 x 100 x 3 mm aufgebaut. Die Breite des Rahmens beträgt an drei Seiten 25 mm, an der vierten Seite 45 mm. Der Rahmen ist an dieser breiteren Seite auf einer Fläche von 45 mm x 35 mm mit dem Werkstoff der Funktionsschicht (Weichkomponente oder 2. Komponente) flächig überspritzt. Bei der Weichkomponente handelt es sich um eine Lippe mit einer Wanddicke von 2 mm, einer Länge von 115 mm und einer Breite von 35 mm. Die mittige Anspritzung der Weichkomponente erfolgt durch eine Bohrung im Material der 1. Komponente. Dadurch sind symmetrische Fließwege gegeben. Die Herstellung des Prüfkörpers erfolgt mit einem 2-Komponenten-Werkzeug nach dem Kernrückzugsverfahren, um gute Bedingungen für die Verbundfestigkeit zu schaffen. Für weitere Details wird auf DE-A 10 2004 047 200 verwiesen.

Die Prüfkörper wurden gemäß den in Tabelle 2 angegebenen Parametern auf einer Mehrkomponenten-Spritzgussmaschine mit einer Schließkraft von 1000 kN hergestellt (Typ Arburg Allrounder, 420 V 1000-350/150, Hersteller Fa. Arburg, D72290 Loßburg).

Die Kenngröße für die Verbundfestigkeit aus der 90°-Rollenschälprüfung nach DIN EN 1464 wird als Schälwiderstand in der Einheit [N/mm] angegeben:

$$\text{Schälwiderstand [N/mm] = Schälkraft [N] / Probenbreite [mm]}$$

Die Werte der minimalen Schälkraft Fmin, der maximalen Schälkraft Fmax und der mittleren Schälkraft Fmittel werden gemessen.

Die mittlere Schälkraft wird in den Tabellen 3a und 3b angegeben und ist ein Maß für die Beurteilung der Verbundfestigkeit. Der mittlere Schälwiderstand wird errechnet, indem der Wert der mittleren Schälkraft durch die Breite der Weichkomponente (35 mm) dividiert wird.

<u>Tabelle 2:</u> **Spritzgießparameter für die Prüfkörperherstellung**

| *Material 1. Komponente:* | | *Material Weichkomponente:* | |
|---|---|---|---|
| BAYBLEND® T85 (PC+ABS) | | Polymergranulat 1 | |
| " | | Polymergranulat 2 | |
| " | | Polymergranulat 3 | |
| " | | Polymergranulat 4 | |
| " | | Polymergranulat 5 | |
| Vortrocknungstemperatur: | 80 [°C] | Vortrocknungstemperatur: | 80 [°C] |
| Vomocknungsdauer: | 3 [h] | Vortroclrnungsdauer: | 2 [h] |
| Werkzeugtemperatur: | 70 [°C] | Werkzeugtemperatur: | 20 [°C] |
| Heizzone 5 (Düse): | 270 [°C] | Heißkanalverteiler: | 180 [°C] |
| Heizzone 4: | 260 [°C] | Heißkanalpatrone: | 180 [°C] |
| Heizzone 3: | 260 [°C] | Heizzone 5 (Düse): | 190 [°C] |
| | | Heizzone 4: | 180 [°C] |
| | | Heizzone 3: | 170 [°C] |
| Heizzone 2: | 250 [°C] | Heizzone 2: | 160 [°C] |
| Heizzone 1 (Trichter): | 230 [°C] | Heizzone 1 (Trichter): | 150 [°C] |
| Einspritzdruck: | 1000-1500 [bar] | Einspritzdruck: | 350-600[bar] |
| Einspritzgeschwindigkeit: | 40-60 [cm$^3$/s] | Einspritzgeschwindigkeit: | 50-100[cm$^3$/s] |
| Einspritzzeit (Istwert): | 1,7-2,1 [s] | Einspritzzeit (Istwert): | 0,3-1,0[s] |
| Umschaltpunkt: | 4-6 [cm$^3$] | Umschaltpunkt: | 2-6 [cm$^3$] |
| Nachdruck 1: | 900 [bar] | Nachdruck 1: | 0-600 [bar] |
| Nachdruckzeit 1: | 3-5 [s] | Nachdruckzeit 1: | 0-4 [s] |
| Restkühlzeit: | 6-10 [s] | Restkühlzeit: | 15-35 [s] |
| Staudruck: | 70 [bar] | Staudruck: | 20 [bar] |
| Dekompression: | 4 [cm$^3$] | Dekompression: | 2 [cm$^3$] |
| Schneckendrehzahl: | 25 [min$^{-1}$] | Schneckendrehzahl: | 15 [min$^{-1}$] |
| Desmopan® DP85092A | | Polymergranulat 1 | |
| " | | Polymergranulat 2 | |
| " | | Polymergranulat 3 | |

(fortgesetzt)

| Material 1. Komponente: | | Material Weichkomponente: | |
|---|---|---|---|
| " | | Polymergranulat 4 | |
| " | | Polymergranulat 5 | |
| Vortrocknungstemperatur: | 80 [°C] | Vortrocknungstemperatur: | 80 [°C] |
| Vortrocknungsdauer: | 4 [h] | Vortrocknungsdauer: | 2 [h] |
| Werkzeugtemperatur: | 20 [°C] | Werkzeugtemperatur: | 20 [°C] |
| Heizzone 5 (Düse): | 210 [°C] | Heißkanalverteiler: | 180 [°C] |
| Heizzone 4: | 220 [°C] | Heißkanalpatrone: | 180 [°C] |
| Heizzone 3: | 210 [°C] | Heizzone 5 (Düse): | 190 [°C] |
| | | Heizzone 4: | 180 [°C] |
| | | Heizzone 3: | 170 [°C] |
| Heizzone 2: | 200 [°C] | Heizzone 2: | 160 [°C] |
| Heizzone 1 (Trichter): | 190 [°C] | Heizzone 1 (Trichter): | 150 [°C] |
| Einspritzdruck: | 1300 [bar] | Einspritzdruck: | 350-600[bar] |
| Einspritzgeschwindigkeit: | 70 [cm$^3$/s] | Einspritzgeschwindigkeit: | 50-100[cm$^3$/s] |
| Einspritzzeit (Istwert): | 1,5 [s] | Einspritzzeit (Istwert): | 0,3-1,0[s] |
| Umschaltpunkt: | 8 [cm$^3$] | Umschaltpunkt: | 2-6 [cm$^3$] |
| Nachdruck 1: | 900 [bar] | Nachdruck 1: | 0-600 [bar] |
| Nachdruckzeit 1: | 6 [s] | Nachdruckzeit 1: | 0-4 [s] |
| Restkühlzeit: | 24 [s] | Restkühlzeit: | 15-35 [s] |
| Staudruck: | 50 [bar] | Staudruck: | 20 [bar] |
| Dekompression: | 4 [cm$^3$] | Dekompression: | 2 [cm$^3$] |
| Schneckendrehzahl: | 25 [min$^{-1}$] | Schneckendrehzahl: | 15 [min$^{-1}$] |

**Tabelle 3a: Haftungsuntersuchungen Träger/Funktionsschicht**

| Trägerschicht (1.Komponente): | Funktionsschicht (2. Komponente): | Schälkraft [N] | Schälwiderstand [N/mm] | Haftfaktor |
|---|---|---|---|---|
| BAYBLEND® T85 (PC+ABS) | *aus Polymergranulat 1* | 0 | 0 | 1 |
| BAYBLEND® T85 (PC+ABS) | *aus Polymergranulat 2* | 72 | 2,0 | 4 |
| BAYBLEND® T85 (PC+ABS) | *aus Polymergranulat 3* | 74 | 2,0 | 4 |
| BAYBLEND® T85 (PC+ABS) | *aus Polymergranulat 4* | 72 | 2,0 | 4 |
| BAYBLEND® T85 (PC+ABS) | *aus Polymergranulat 5* | 104 | 3,0 | 5 |

Die Beispiele 1 und 5 sind Vergleichsbeispiele.

**Tabelle 3b:** **Haftungsuntersuchungen Oberflächenschicht/Funktionsschicht**

| Oberflächenschicht (1.Komponente) | Funktionsschicht (2. Komponente): | Schälkraft [N] | Schälwiderstand [N/mm] | Haftfaktor |
|---|---|---|---|---|
| DESMOPAN® DP85092A | *aus Polymergranulat 1* | 23 | 0,5 | 2 |
| DESMOPAN® DP85092A | *aus Polymergranulat 2* | 45 | 1,0 | 3 |
| DESMOPAN® DP85092A | *aus Polymergranulat 3* | 72 | 2,0 | 4 |
| DESMOPAN® DP85092A | *aus Polymergranulat 4* | 93 | 3,0 | 5 |
| DESMOPAN® DP85092A | *aus Polymergranulat 5* | 125 | 4,0 | 5 |
| Die Beispiele 1 und 5 sind Vergleichsbeispiele. | | | | |

**Die Angaben zum Haftfaktor bedeuten:**

| 1 | keine Verbindung | keine Haftung , keine Entformung als Verbundteil |
|---|---|---|
| 2 | Adhäsion | leichtes Anhaften, Weichkomponente bleibt nicht an Hartkomponente kleben |
| 3 | Adhäsion-Kohäsion | gutes Anhaften, Weichkomponente geht lückenhaft feste Verbindung (Kohäsion) mit Hartkomponente ein |
| 4 | Kohäsion | sehr gute Haftung, Weichkomponente geht vollflächige feste Verbindung mit Hartkomponente ein, Bruch der Schälung innerhalb der Weichkomponente |
| 5 | Kohäsion > Materialfestigkeit (K>MF) | Verbundfestigkeit ist höher als Materialfestigkeit; unlösbare Verbindung, keine Schälung mehr möglich, Weichkomponente reißt ab vor Schälbeginn |

Wie aus den Tabellen 3a und 3b zu entnehmen ist, konnte anhand der Beispiele 2 bis 4 gezeigt werden, dass bei richtiger Auswahl der Einzelkomponenten der Funktionsschicht Bauteile mit guter Haftung der einzelnen Schichten untereinander und mit gleichzeitig einer für eine gute Druckhaptik erforderlichen Härte realisierbar sind.

**Patentansprüche**

1. Kunststoffverbundformteil aus drei Schichten, das ein nicht-geschäumtes Trägerelement sowie eine Oberflächenschicht mit einer zwischen Trägerelement und Oberflächenschicht angeordneten haftungsmodifizierten Funktionsschicht umfasst, **dadurch gekennzeichnet, dass**
   als Oberflächenschicht spritzgegossene Folien bzw. Häute oder Slush-Häute aus weichgemachtem PVC, einem thermoplastischen Polyetherblockamid (TPE-A), einem thermoplastischen Polyester-Elastomer (TPE-E), einem thermoplastischen Polyolefin (type-O) oder einem thermoplastischen Polyurethan (TPU) verwendet werden,
   die haftungsmodifizierte Funktionsschicht

   a) mindestens ein thermoplastisches Elastomer aus der Gruppe bestehend aus hydrierten Styrol-Blockcopolymeren (HSBC),

b) mindestens einen Haftungsmodifikator aus der Gruppe bestehend aus thermoplastischen Polyetherblockamiden (TPE-A), thermoplastischen Polyester-Elastomeren (TPE-E) und thermoplastischen Polyurethanen (TPU) in einer Menge von 60 bis 100 Gewichtsteilen, bezogen auf 100 Gewichtsteile der Summe aus Elastomer a) und gegebenenfalls Verträglichkeitsvermittler d),

c) mindestens einen Weichmacher und

d) gegebenenfalls einen Verträglichkeitsvermittler

enthält und eine Härte von kleiner als 46 Shore A aufweist, und

das nicht-geschäumte Trägerelement aus einem thermoplastischen Kunststoff ausgewählt aus der Gruppe bestehend aus Polyamid (PA), Polypropylen (PP), glasfaserverstärktes PP, Polyphenylenoxid (PPO), Polybutylenterephthalat (PBT), Polystyrol (PS), AcrylnitrilButadien-Styrol-Copolymer (ABS), Polycarbonat(PC)/ABS-Blend, PS/PP-Blend, Styrol-Maleinsäureanhydrid-Copolymer (SMA)/ABS-Blend, ABS/PA-Blend, PBT/PC-Blend und PBT/Acrylnitril-Styrol-Acrylester(ASA)-Blend, besteht.

2. Kunststoffverbundformteil gemäß Anspruch 1, dadurch gekenntzeichnet, dass der in der haftungsmodifizierten Funktionsschicht mindestens eine Haftungsmodifikator ein thermoplastisches Polyurethan (TPU) ist.

3. Kunststoffverbundformteil gemäß Anspruch 1, **dadurch gekennzeichnet, dass** die in der haftungsmodifizierten Funktionsschicht enthalten thermoplastischen Elastomere Verbindungen aus der Gruppe bestehend aus Styrol-Ethylen-Propylen-Styrol-Blockcopolymeren (SEPS), Styrol-Ethylen-Ethylen-Propylen-Styrol-Blockcopolymeren (SEEPS) und Styrol-Ethylen-Butylen-Styrol-Blockcopolymeren (SEBS) sowie Kombinationen von diesen sind.

4. Kunststoffverbundformteil gemäß Anspruch 1, **dadurch gekennzeichnet, dass** der Verträglichkeitsvermittlez ausgewählt ist aus der Gruppe bestehend aus Styrol-Butadien-Styrol-Blockcopolymeren (SBS), Styrol/SBS-Copolymeren und durch polare pfropfung funktionalisierten, thermoplastischen Polymeren.

5. Kunststoffverbundformteil gemäß Anspruch 4, **dadurch gekennzeichnet, dass** die thermoplastischen Polymere aus der Gruppe bestehend aus hydrierten Styrel-Blockcopolymeren (HSBC), Polypropylen (PP), Ethylen-Propylen-Dienmomoner-Blockcopolymere (EPDM), Polyolefine, Methacrylat-Butadien-Styrol-Blockcopolymere (MBS, Core-Shel-Modifikatoren), Polystyrole und Ionomeren ausgewählt sind.

6. Kunststoffverbundformteil gemäß Anspruch 4, **dadurch gekennzeichnet, dass** das durch polare Pfropfung funktionalisierte thermoplastische Polymer ein durch polare Pfropfung funktionalisiertes hydriertes Styrol-Blockcopolymer (HSBC) ist.

7. Kunststoffverbundformteil gemäß Anspruch 4, **dadurch gekennzeichnet, dass** die Fuuktionalisierung des thermoplastischen Polymeren durch Pfropfung mit organischen Verbindungen, die polare Gruppen ausgewählt aus Anhydriden (z.B. Maleinsäureanhydrid), Acrylaten, Epoxiden und/oder Säuregruppen enthalten, erreicht wird.

8. Kunststoffverbundformteil gemäß Anspruch 1, **dadurch gekennzeichnet, dass** der Verträglichkeitsvermittler d) in einer Menge von 0 bis 100 Gewichtsteilen, bevorzugt von 1 bis 100 Gewichtsteilen, bezogen auf 100 Gewichtsteile des thermoplastischen Elastomers a) der Funktionsschicht, vorliegt.

9. Kunststoffverbundformteil gemäß Anspruch 1, **dadurch gekennzeichnet, dass** es sich bei den in der haftungsmodifizierten Funktionsschicht enthaltenen Weichmachern um paraffinische Öle handelt.

10. Kunststoffverbundformteil gemäß Anspruch 1, **dadurch gekennzeichnet, dass** die in der haftungsmodifizierten Funktionsschicht enthaltenen Weichmacher in einer Menge von 1 bis 300 Gewichtsteilen, bezogen auf 100 Gewichtsteile der Summe aus Elastomer a) und gegebenenfalls Verträglichkeitsvermittler d), vorliegen.

11. Kunststoffverbundformteil gemäß Anspruch 1, **dadurch gekennzeichnet, dass** die baftungsmodifizierte Funktionsschicht im geschäumten Zustand eine Wanddicke von 2 bis 15 mm aufweist.

12. Kunststoffverbundformteil gemäß Anspruch 1, **dadurch gekennzeichnet, dass** die baflungsmodifizierte Funktionsschicht als geschäumte oder ungeschäumte Schicht vorliegt.

13. Kunststoffverbundformteil gemäß Anspruch 1, **dadurch gekennzeichnet, dass** die Oberflächenschicht eine Dicke von 0,5 bis 2 mm aufweist.

14. Kunststoffverbundformteil gemäß Anspruch 1, **dadurch gekennzeichnet, dass** die Oberflächenschicht eine genarbte bzw. strukturierte Oberfläche hat.

15. Verwendung des Kunststoffverbundformteiles gemäß Anspruch 1 bis 14 im Fahrzeuginnenraum, als Armaturentafel, Türinnenverkleidung, Ablageschale, Griff, Bedienknopf und Blende.

**Claims**

1. Plastics composite moulding made of three layers and comprising an unfoamed substrate element and a surface layer with an adhesion-modified functional layer arranged between substrate element and surface layer, **characterized in that**
   injection-moulded foils or, respectively, skins or slush skins made of plasticized PVC, of a thermoplastic polyether block amide (TPE-A), of a thermoplastic polyester elastomer (TPE-E), of a thermoplastic polyolefin (TPE-O) or of a thermoplastic polyurethane (TPU) are used as surface layer,
   the adhesion-modified functional layer comprises

   a) at least one thermoplastic elastomer from the group consisting of hydrogenated styrene block copolymers (HSBC),
   b) an amount of from 60 to 100 parts by weight, based on 100 parts by weight of the entirety of elastomer a) and optionally compatibilizer d), of at least one adhesion modifier from the group consisting of thermoplastic polyether block amides (TPE-A), thermoplastic polyester elastomers (TPE-E) and thermoplastic polyurethanes (TPU),
   c) at least one plasticizer and
   d) optionally a compatibilizer,

   and the hardness of this functional layer is less than 46 Shore A, and
   the unfoamed substrate element is composed of a thermoplastic selected from the group consisting of polyamide (PA), polypropylene (PP), glass-fibre-reinforced PP, polyphenylene oxide (PPO), polybutylene terephthalate (PBT), polystyrene (PS), acrylonitrile-butadiene-styrene copolymer (ABS), polycarbonate (PC)/ABS blend, PS/PP blend, styrene-maleic anhydride copolymer(SMA)/ABS blend, ABS/PA blend, PBT/PC blend and PBT/acrylonitrile-styrene-acrylate(ASA) blend.

2. Plastics composite moulding according to Claim 1, **characterized in that** the at least one adhesion modifier in the adhesion-modified functional layer is a thermoplastic polyurethane (TPU).

3. Plastics composite moulding according to Claim 1, **characterized in that** the thermoplastic elastomers present in the adhesion-modified functional layer are compounds from the group consisting of styrene-ethylene-propylene-styrene block copolymers (SEPS), styrene-ethylene-ethylene-propylene-styrene block copolymers (SEEPS) and styrene-ethylene-butylene-styrene block copolymers (SEBS) and combinations of these.

4. Plastics composite moulding according to Claim 1, **characterized in that** the compatibilizer is one selected from the group consisting of thermoplastic polymers functionalized by polar grafting, styrenebutadiene-styrene block copolymers (SBS) and styrene/SBS copolymers.

5. Plastics composite moulding according to Claim 4, **characterized in that** the thermoplastic polymers have been selected from the group consisting of hydrogenated styrene block copolymers (HSBC), polypropylene (PP), ethylene-propylene-diene-monomer block copolymers (EPDM), polyolefins, methacrylate-butadiene-styrene block copolymers (MBS, core-shell modifiers), polystyrenes and ionomers.

6. Plastics composite moulding according to Claim 4, **characterized in that** the thermoplastic polymer functionalized by polar grafting is a hydrogenated styrene block copolymer (HSBC) functionalized by polar grafting.

7. Plastics composite moulding according to Claim 4, **characterized in that** the functionalization of the thermoplastic polymer is achieved by grafting with organic compounds which comprise polar groups selected from anhydrides (e.g. maleic anhydride), acrylates, epoxides and/or acid groups.

8. Plastics composite moulding according to Claim 1, **characterized in that** the amount present of the compatibilizer d) is from 0 to 100 parts by weight, preferably from 1 to 100 parts by weight, based on 100 parts by weight of the thermoplastic elastomer a) of the functional layer.

9. Plastics composite moulding according to Claim 1, **characterized in that** the plasticizers present in the adhesion-modified functional layer involve paraffinic oils.

10. Plastics composite moulding according to Claim 1, **characterized in that** the amount present of the plasticizers present in the adhesion-modified functional layer is from 1 to 300 parts by weight, based on 100 parts by weight of the entirety of elastomer a) and optionally compatibilizer d).

11. Plastics composite moulding according to Claim 1, **characterized in that** the wall thickness of the adhesion-modified functional layer in the foamed condition is from 2 to 15 mm.

12. Plastics composite moulding according to Claim 1, **characterized in that** the adhesion-modified functional layer takes the form of foamed or unfoamed layer.

13. Plastics composite moulding according to Claim 1, **characterized in that** the thickness of the surface layer is from 0.5 to 2 mm.

14. Plastics composite moulding according to Claim 1, **characterized in that** the surface layer has a grained or structured surface.

15. Use of the plastics composite moulding according to any of Claims 1 to 14 in a vehicle interior, as dashboard, inner door cladding, oddments tray, handle, operating button or sun visor.

**Revendications**

1. Pièce moulée composite plastique constituée de trois couches, qui comprend un élément support non moussé et une couche de surface, avec une couche fonctionnelle à adhésion modifiée agencée entre l'élément support et la couche de surface, **caractérisée en ce que**
des feuilles ou des peaux moulées par injection ou des peaux moulées par embouage en PVC plastifié, en un polyéther-bloc-amide thermoplastique (TPE-A), en un polyester-élastomère thermoplastique (TPE-E), en une polyoléfine thermoplastique (TPE-O) ou en un polyuréthane thermoplastique (TPU) sont utilisées en tant que couche de surface,
la couche fonctionnelle à adhésion modifiée contient

a) au moins un élastomère thermoplastique du groupe constitué par les copolymères séquencés de styrène hydrogénés (HSBC),
b) au moins un modificateur d'adhésion du groupe constitué par les polyéther-bloc-amides thermoplastiques (TPE-A), les polyester-élastomères thermoplastiques (TPE-E) et les polyuréthanes thermoplastiques (TPU) en une quantité de 60 à 100 parties en poids, par rapport à 100 parties en poids de la somme de l'élastomère a) et éventuellement de l'agent de compatibilité d),
c) au moins un plastifiant et
d) éventuellement un agent de compatibilité et présente une dureté inférieure à 46 Shore A, et l'élément support non moussé est constitué d'un plastique thermoplastique choisi dans le groupe constitué par le polyamide (PA), le polypropylène (PP), le PP renforcé par des fibres de verre, l'oxyde de polyphénylène (PPO), le polybutylène téréphtalate (PBT), le polystyrène (PS), le copolymère acrylonitrile-butadiène-styrène (ABS), le mélange polycarbonate (PC)/ABS, le mélange PS/PP, le mélange copolymère styrène-anhydride de l'acide maléique (SMA)/ABS, le mélange ABS/PA, le mélange PBT/PC et le mélange PBT/acrylonitrile-styrène-ester acrylique (ASA).

2. Pièce moulée composite plastique selon la revendication 1, **caractérisée en ce que** le ou les modificateurs d'adhésion dans la couche fonctionnelle à adhésion modifiée sont un polyuréthane thermoplastique (TPU).

3. Pièce moulée composite plastique selon la revendication 1, **caractérisée en ce que** les élastomères thermoplastiques contenus dans la couche fonctionnelle à adhésion modifiée sont des composés du groupe constitué par les copolymères séquencés styrène-éthylène-propylène-styrène (SEPS), les copolymères séquencés styrène-éthylène-éthylène-propylène-styrène (SEEPS) et les copolymères séquencés styrène-éthylène-butylène-styrène (SEBS), ainsi que les combinaisons de ceux-ci.

**4.** Pièce moulée composite plastique selon la revendication 1, **caractérisée en ce que** l'agent de compatibilité est choisi dans le groupe constitué par les copolymères séquencés styrène-butadiène-styrène (SBS), les copolymères styrène/SBS et les polymères thermoplastiques fonctionnalisés par greffage polaire.

**5.** Pièce moulée composite plastique selon la revendication 4, **caractérisée en ce que** les polymères thermoplastiques sont choisis dans le groupe constitué par les copolymères séquencés de styrène hydrogénés (HSBC), le polypropylène (PP), les copolymères séquencés éthylène-propylène-monomère diène (EPDM), les polyoléfines, les copolymères séquencés méthacrylate-butadiène-styrène (MBS, modificateur noyau-enveloppe), les polystyrènes et les ionomères.

**6.** Pièce moulée composite plastique selon la revendication 4, **caractérisée en ce que** le polymère thermoplastique fonctionnalisé par greffage polaire est un copolymère séquencé de styrène hydrogéné fonctionnalisé par greffage polaire (HSBC).

**7.** Pièce moulée composite plastique selon la revendication 4, **caractérisée en ce que** la fonctionnalisation des polymères thermoplastiques est obtenue par greffage avec des composés organiques qui contiennent des groupes polaires choisis parmi les anhydrides (p. ex. anhydride de l'acide maléique), les acrylates, les époxydes et/ou les groupes acides.

**8.** Pièce moulée composite plastique selon la revendication 1, **caractérisée en ce que** l'agent de compatibilité d) est présent en une quantité de 0 à 100 parties en poids, de préférence de 1 à 100 parties en poids, par rapport à 100 parties en poids de l'élastomère thermoplastique a) de la couche fonctionnelle.

**9.** Pièce moulée composite plastique selon la revendication 1, **caractérisée en ce que** les plastifiants contenus dans la couche fonctionnelle à adhésion modifiée sont des huiles paraffiniques.

**10.** Pièce moulée composite plastique selon la revendication 1, **caractérisée en ce que** les plastifiants contenus dans la couche fonctionnelle à adhésion modifiée sont présents en une quantité de 1 à 300 parties en poids, par rapport à 100 parties en poids de la somme de l'élastomère a) et éventuellement de l'agent de compatibilité d).

**11.** Pièce moulée composite plastique selon la revendication 1, **caractérisée en ce que** la couche fonctionnelle à adhésion modifiée présente à l'état moussé une épaisseur de paroi de 2 à 15 mm.

**12.** Pièce moulée composite plastique selon la revendication 1, **caractérisée en ce que** la couche fonctionnelle à adhésion modifiée se présente sous la forme d'une couche moussée ou non moussée.

**13.** Pièce moulée composite plastique selon la revendication 1, **caractérisée en ce que** la couche de surface présente une épaisseur de 0,5 à 2 mm.

**14.** Pièce moulée composite plastique selon la revendication 1, **caractérisée en ce que** la couche de surface a une surface grainée ou structurée.

**15.** Utilisation de la pièce moulée composite plastique selon les revendications 1 à 14 dans des intérieurs d'automobiles, en tant que tableau de bord, revêtement intérieur de porte, vide-poche, poignée, bouton de commande et panneau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2416694 A
- DE 2416694 A1
- DE 4304751 A1
- EP 0907484 B
- DE 102004033139 A
- DE 102005024776 A
- DE 3414794 C2

- DE 10005862 A
- US 5472782 A
- DE 19845235 A1
- EP 0710703 A1
- EP 0699519 A2
- EP 1255036 A1
- DE 102004047200 A

**In der Beschreibung aufgeführte Nicht-Patentliteratur**

- Polyurethane. **G. BECKER ; D. BRAUN.** Kunststoff Handbuch. Carl Hanser Verlag, 1983, vol. 7